# EUROPEAN PATENT APPLICATION

(11) **EP 4 848 115 A1**
(43) Date of publication of application: **02.12.2026**
(21) Application number: 25305762.4
(22) Date of filing: 27.05.2025
(51) Int. Cl.: G06F 17/17, G06T 5/92

(54) **METHODS AND DEVICES FOR IMPLEMENTING COMPLEX FUNCTIONS IN SIGNAL PROCESSING**

(71) Applicant: InterDigital CE Patent Holdings, SAS, 75017 Paris (FR)
(72) Inventor: LE NAOUR, Robin, 35510 CESSON-SEVIGNE (FR); TOUZE, David, 35200 RENNES (FR); MAZZANTE, Angelo, 35520 MELESSE (FR)
(74) Representative: Interdigital

(57) **Abstract**

In various implementations, methods and devices are disclosed that generate and apply an approximation of a complex function with a polynomial function on a search interval. According to a salient feature, methods and devices implement a reduction function to reduce the input values' interval used in a polynomial approximation of a complex function. Advantageously, the interval reduction is later compensated within the polynomial function.

## Description

### BACKGROUND

The present application is related to signal processing, as with HDR, which often involve complex mathematical functions.

### BRIEF SUMMARY

In various implementations, methods and devices are disclosed that implement a reduction function to reduce the input values' interval used in a polynomial approximation of a complex function. Advantageously, the interval reduction is later compensated within the polynomial function.

Briefly stated, in one embodiment a method for generating an approximation of a first function with a polynomial function on a search interval is disclosed that comprises obtaining a first function to apply to an input value representative of picture data; obtaining a polynomial order of a polynomial function and a search interval of input values, the polynomial function being an approximation of the first function on the search interval of the polynomial order; obtaining a reduction exponent of a reduction function, wherein the reduction function, when applied to an input value in the search interval and to the reduction exponent, results in a reduced input value within a reduced interval having a lower dynamic range than search interval; for each current value of the reduction exponent: obtaining a reduced interval with reduction function and current value of reduction exponent; obtaining the current polynomial function as an approximation of the composition function of the first function and of a reciprocal function of the reduction function; on condition that an error between an output of the first function and an output of an approximation of the first function by the polynomial function on the search interval is higher than an accuracy requirement, iterating the method with an updated current value of reduction exponent; and generating an approximation of the first function with the polynomial function on the search interval obtained for the current value of reduction exponent satisfying the accuracy requirement.

One embodiment also provides a method of processing the obtained polynomial function being an approximation of the first function, for instance a transfer function or in a color conversion function. The method comprises obtaining an input value representative of picture data; obtaining a polynomial approximation function for a first function, a search interval of input values for the first function, a reduction function as above, on condition that the input value belongs to the search interval of input values for the first function used to generate the polynomial approximation function for a first function, applying the reduction function to the input value to generate the reduced input value; and obtaining an approximation of the first function applied to the input value representative of the picture data by applying the polynomial approximation function the reduced input value.

One or more embodiments also provide an apparatus for video processing, or rendering comprising one or more processors and at least one memory coupled to said one or more processors, wherein said one or more processors are configured to perform the method according to any of the embodiments described herein.

One or more embodiments also provide a computer program comprising instructions which when executed by one or more processors cause the one or more processors to perform the method according to any of the embodiments described herein. One or more of the present embodiments also provide a computer readable storage medium having stored thereon instructions for processing or rendering a video according to the methods described herein.

One or more embodiments also provide a computer readable storage medium having stored thereon video data generated according to the methods described above. One or more embodiments also provide a method and apparatus for transmitting or receiving the video data generated according to the methods described herein

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example of conversion of a hybrid log gamma RGB signal to an inverse gamma RGB signal in which one or more embodiments of the present disclosure may be implemented;
FIG. 3 is a block diagram illustrating an example of a method of polynomial search according to one or more embodiments of the present disclosure; and
FIG. 4 is a block diagram illustrating an example of a method of processing the polynomial function as an approximation of the first function according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

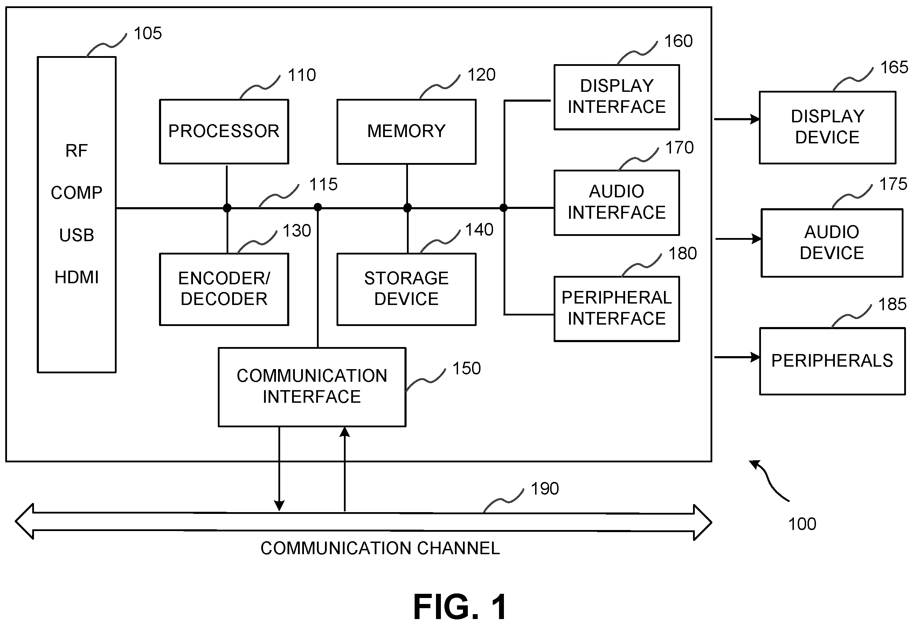

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Computing complex mathematical functions is a common problem in signal processing. Such functions regularly use power, logarithmic, exponential or division functions which are very costly in terms of computation time. To tackle this problem, it is often possible to precompute look up tables and interpolate results, however that approach suffers from using a cache memory and random access through the look up table which can deteriorate computational time.

Accordingly, the present principles propose reducing the dynamic range of input values with an interval reduction function during a polynomial approximation search. Advantageously, the disclosed method provides a low memory footprint and a constant computational time for a predefined interval. Besides, result's accuracy may be tuned by adapting the parameter of interval reduction function and/or increasing polynomial degree to achieve good results. According to different variants, reduction function may be a combination of square root, cubic root, inverse square root or inverse cubic root which are fast and precise on modern computer architecture. For the sake of completion, the method is compatible with any variant of polynomials search on a bounded interval. As an example, a polynomial function may be optimally determined with the well-known Remez algorithm.

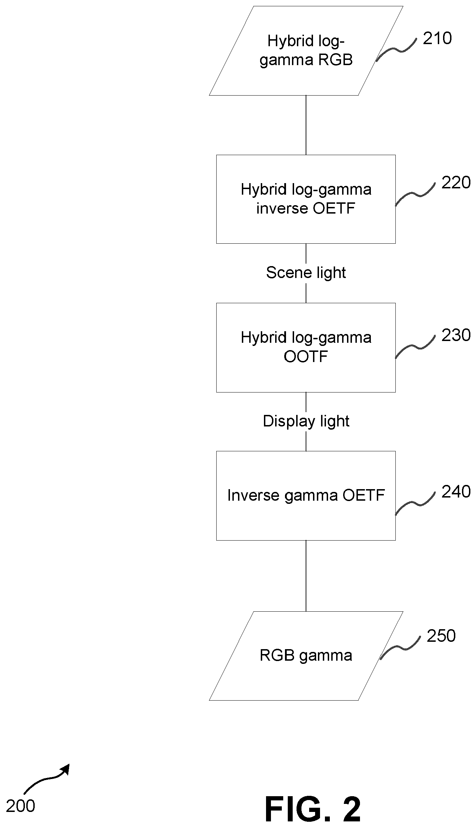

A common use case of such complex mathematical functions is the conversion a hybrid log gamma RGB signal to an inverse gamma RGB signal as described in *"SMPTE ST 2084:2014, High Dynamic Range Electro-Optical Transfer Function of Mastering Reference Displays".* FIG. 2 is a block diagram illustrating an example of conversion of a hybrid log gamma RGB signal to an inverse gamma RGB signal in which one or more embodiments of the present disclosure may be implemented. A Hybrid Log Gamma HLG system is considered as a "scene-referred" system, where the HDR signal represents the light in the scene (with or without artistic adjustment), for example detected by a camera, Since the overall optical system is non-linear (typically characterized as a power or "gamma" law) scene-referred signal are not linearly related. This nonlinearity is modelled by the opto-optic transfer function (OOTF) which compensates for the difference in tonal perception between the environment of the camera and that of the display as further explained in Annex 1 of Rec. ITU-R BT.2100. With scene-referred signals the primary transfer function is the OETF, which defines how the signal is related to linear scene light. Accordingly, in a step 220, a HLG inverse OETF converts the signal from scene linear light (210) to non-linear representation. Then, in 230, HLG OOTF is applied to the signal. Finally a inverse gamma mapping is applied in step 240 to produce RGB gamma for output display.

With a look up table approach the conversion of a hybrid log gamma RGB signal to an inverse gamma RGB signal would require 3 LUTs and 7 memory access per pixel, 3 to compute Hybrid log gamma inverse OETF on input RGB, 1 to compute Hybrid log gamma OOTF on Y luminance component and another 3 to compute the inverse gamma on RGB.

LUTs have two major drawbacks, they require to be cached memory in memory to be efficient and access LUT data depends on input and therefore there is no predictable pattern to access cached memory making them suboptimal in some cases. Using LUTs will make heavy use of memory and almost no arithmetic will be performed during memory fetch.

Another approach consists in using polynomials as Eq (1) to compute costly operations such as transfer functions. Polynomials can be computed with times and add operators only, making their evaluation extremely fast using processor vectorial and super scalar capabilities. $p \left(x\right) = {\sum }_{i = 1}^{n} \left({a}_{i} {x}^{i}\right) = {a}_{0} + {a}_{1} x + {a}_{2} {x}^{2} + {a}_{3} {x}^{3} + ⋯ + {a}_{n} {x}^{n}$ (Eq. 1)

Polynomials' performance in terms of accuracy depends mainly on input interval covered by the polynomials and the function to be approximated. The largest the input interval the less accurate the polynomials approximation will be. For HDR use case and a linear to ST 2084 OETF conversion, the OETF input interval [0.0005, 10000] in Canderella/m² need to be precisely computed to avoid any defect in the quantification process. This large interval makes regular polynomials approximation impractical as provided accuracy is too small even for high degree polynomials. An alternative solution is to split the input interval into sub intervals to increase accuracy. However, this solution increases greatly the number of polynomials coefficients slowing down computations due to register spilling inside the polynomial computation loop.

It is therefore desirable to find a polynomial function P(x) able to approximate a function F(x) over a predetermined interval. The polynomial should have limited order and good accuracy on a large input x, interval such as [0.0005, 10000] is common for HDR use case. The present principles propose to reduce the input value interval for the polynomials to increase the accuracy of the approximation. Advantageously, the interval reduction is later compensated within the polynomial function. The interval reduction needs to be performed by a continuous function with a reciprocal counterpart that may be composed with F(x).

According to a particular variant embodiment, a reduction function may be ${x}^{\frac{1}{y}}$ denoted R(x,y), with x variable being the input value to be processed by the polynomials and y a reduction exponent value to determine that reduces the input interval in order for the polynomial function P(x) to achieve accuracy requirement of the estimation. The interval reduction function ${x}^{\frac{1}{y}}$ is compensated at the polynomial input with its reciprocal function *x^{y}* denoted RR(x,y). The approximation function then results in finding a new polynomials P'(x,y) for F(RR(x,y)). To simplify the polynomial search, the variable y will be fixed. Determining y is done as preprocessing, iterating over several y to find the right polynomial accuracy for a predetermined polynomial order.

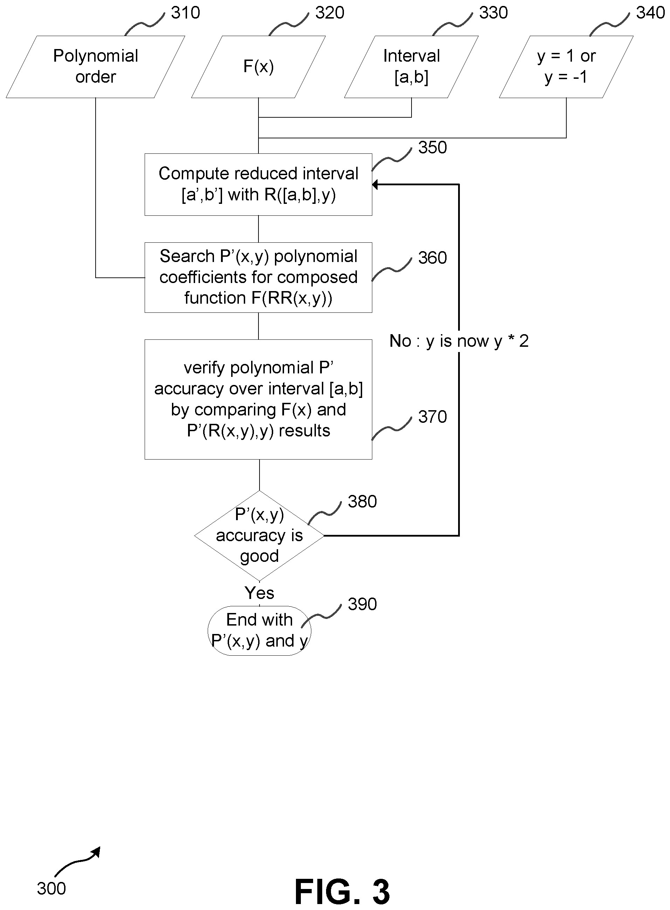

FIG. 3 is a block diagram illustrating an example of a method of polynomial search according to one or more embodiments of the present disclosure. The method 300 for generating an approximation of the first function with a polynomial function on a search interval is processed as follows. First, the initial conditions are obtained which comprises a first function F(x) to be approximated with a polynomial function, an interval [a,b] of definition for F(x) to limit the polynomial search, a polynomial order that will limit the polynomial search to a certain order, an initial y value for interval reduction function R(x,y)where y may initialized to 1 or -1, both value can be tested. Accordingly, in step 320, a first function F(x) (e.g. transfer function or a color conversion function) to apply to an input value (x) representative of picture data is obtained. This first function needed to be approximated by a polynomial function. In 310, a polynomial order of a polynomial function is determined which is a tradeoff between accuracy and complexity as explained above. Advantageously, iterations on the polynomial order may be implemented on top of iterations on reduction exponent value y. In 330, a search interval ([a,b]) of input values is defined (e.g. [0.0005, 10000] for HLG EOTF). The polynomial function of the polynomial order approximates the first function F(x) on the search interval. In 340, a reduction parameter y of a reduction function R(x, y) is initialized. According to a particular variant, $R \left(x, y\right) = {x}^{\frac{1}{y}}$ and a reduction parameter is denoted reduction exponent y. The reduction function R(x,y), when applied to an input value in the search interval ([a,b]) and to the reduction exponent, results in a reduced input value within a reduced interval ([a', b']) having a lower dynamic range than search interval ([a,b]). As described hereafter for HLG use case, a value of the reduction exponent (y) is an integer in [-8, 8] for instance among the integer values {-8, -4, -2, -1, 1, 2, 4, 8}. According to a particular variant, an initial value of the reduction exponent (y) may be 1 or -1.

In steps 350, 360, 370, 380, an iteration over the values of reduction exponent is performed. In step 350, the reduction function, e.g. $R \left(x, y\right) = {x}^{\frac{1}{y}}$ is applied to the interval [a, b] with the current value of reduction exponent to generate a reduced interval [a', b'] = R([*a, b*]*,* y)*.* Advantageously, the step 350 consists of computing a reduced interval to limit further the polynomial input interval and increase accuracy. For instance, a first iteration for this step uses y equals 1 or -1 and $R \left(x, y\right) = {x}^{\frac{1}{y}}$ i.e. respectively *x or* $\frac{1}{x}$.

In step 360, the polynomial search is performed that provides the current polynomial function as an approximation of the composition function of the first function and a reciprocal function of the reduction function. Indeed, once a polynomial search interval and a polynomial order are determined, a polynomial search for the composed function F(RR(x)) is performed. RR(x) is the reciprocal function for function R(x) such as R(RR(x)) = x. According to a particular variant where $R \left(x, y\right) = {x}^{\frac{1}{y}}$, then RR(x, y) = x^{y}. Polynomial search itself may be performed using the well-known Remez algorithm over the reduced interval determined for the determined polynomial order. Polynomial search provides P'(x,y).

In a step 370, the accuracy requirement of the obtained polynomial function is checked. For instance, an error between an output of the first function and an output of an approximation of the first function with the polynomial function on the search interval is computed. For instance, verifying polynomial accuracy over interval of interest [a,b] may be done by sampling the interval [a,b] and computing error between F(x) and P'(R(x,y),y) where x is given the sampled values. Error function may be a relative error, absolute error and may depend on the required approximation specifics. If the computed error is higher than accuracy requirement, then y is may be updated to another value, and the process is repeated until the required accuracy is obtained. According to a particular variant, an updated value of reduction exponent y may be the current value multiplied by 2 for a next iteration.

Once, the accuracy requirement is satisfied 380, the polynomial function obtained on the search interval for the current value of reduction exponent is output as the approximation of the first function and the polynomial search ends 390. The resulting polynomial function may be used in a picture processing, for instance related to HDR processing.

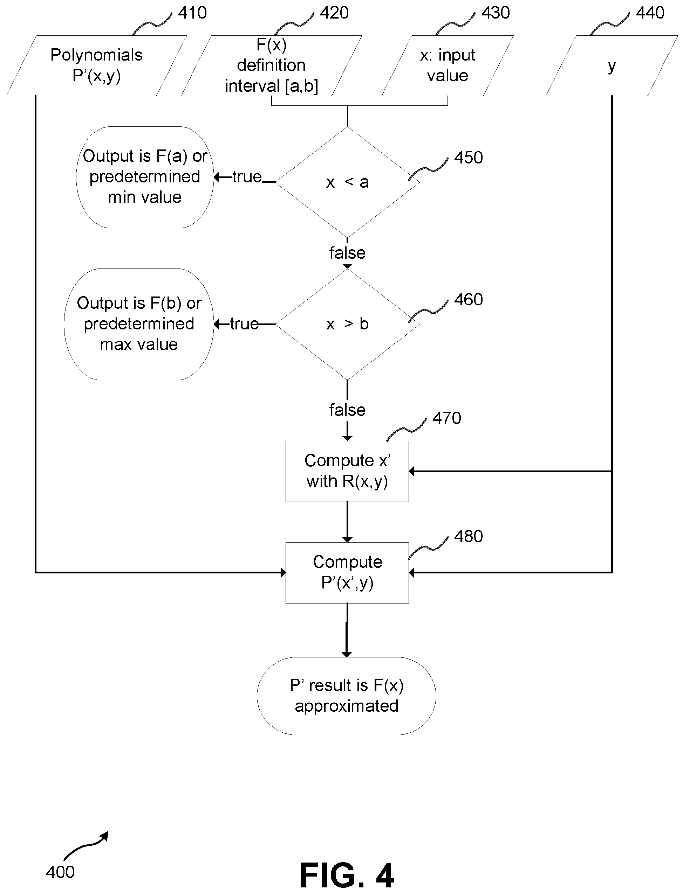

FIG. 4 is a block diagram illustrating an example of a method of processing the polynomial function as an approximation of the first function according to one or more embodiments of the present disclosure. The method 400 comprises initial steps 410, 420, 430, 440 for obtaining the inputs data comprising polynomial function P'(x,y) determined by the polynomial search in the method of FIG. 3, an interval of interest for polynomial P', the input value x to be approximated by P' and the reduction exponent y for the reduction function R(x,y) determined by the polynomial search. For instance, the input value x (430) may be representative of picture data. For instance, the first function is a transfer function or a color conversion function to apply on picture data. For instance, the polynomial function approximating the first function, the search interval [a,b] of input values for the first function, and the reduction function are obtained from an offline processing according to the method of FIG. 3. Then, input x is checked to be in the interval for F or P', i.e [a,b]. If x is lower 450 than to lower interval bound a then process outputs F(a) or another predetermined minimum value. For instance, the predetermined minimum value may be 0, if it is higher 460 than the higher interval bound b then process may outputs F(b) or another predetermined maximum value. If the input value x belongs to the search interval [a,b] of input values for the first function used to generate the polynomial approximation function for a first function, then in a step 470, the reduction function is applied to the input value x to generate the reduced input value x' and the polynomial approximation function P' is applied to the reduced input value (x') to provide an approximation of the first function applied to the input value x representative of the picture data. In other words, considering input value x whose dynamic range is [a,b], x' = R(x, y) computed with using R(x, y) reduces x dynamic range. The reduction steps may be done using composition of a fast implementation of mathematical function like square root, inverse square root, cubic root or inverse cubic root. In a step 480, the final computation of P' (x', y) will provide an approximation for F(x). As mentioned above, a fast polynomial evaluation itself may be implemented, for instance, using Horner scheme according to Eq.2 below: $p \left(x\right) = {a}_{0} + x \left({a}_{1}+x\left({a}_{2}+x\left({a}_{3}+⋯+x\left({a}_{n - 1}+x {a}_{n}\right)…\right)\right)\right)$ (Eq. 2)

According to one or more embodiments, the method disclosed with FIG. 3 or FIG.4 may find a direct application for the ST 2084 EOTF computation as defined with Eq 3. $\begin{matrix}{EOTF}^{- 1} \left[{F}_{D}\right] = {\left(\frac{{C}_{1} + {C}_{2} {Y}^{{m}_{1}}}{2 + {C}_{3} {Y}^{{m}_{1}}}\right)}^{{m}_{2}} \\ Y = \frac{{F}_{D}}{1000}\end{matrix}$ (Eq. 2) Where:
Y denotes a linear color value
*EOTF*^{*-*1}[*F_{D}*] denotes the corresponding nonlinear color value ${m}_{1} = 2610 / 4086 \times \frac{1}{4} = 0 , 1593017578125$ ${m}_{2} = 2523 / 4096 \times 128 = 78 , 84375$ ${C}_{1} = 3424 / 4096 = 0 , 8359375 = {C}_{3} - {C}_{2} + 1$ ${C}_{2} = 2413 / 4096 \times 32 = 18 , 8515625$ ${C}_{3} = 2392 / 4096 \times 32 = 18 , 6875$

The accuracy requirement may be set for a 10^{th} order polynomial denoted P'(x,y) and for the values y having the values 2, 4, 8, -8. The error function err(a,b) may be the relative error function. Table 1 illustrates the results of approximation search for ST2084 EOTF-1 (Eq. 2) and the resulting 10^{th} order polynomial coefficients for P'(x,2), P'(x,4), P'(x,8), and P' (x, -8).

| Polynomial coefficients | P'(x,2) | P'(x,4) | P'(x,8) | P' (x, -8) |
|---|---|---|---|---|
| a11 | -38658.887 | 1086.8136 | 172.78777 | -5.875274e-09 |
| a10 | 190125.03 | -5543.7178 | -897.1842 | 3.7581867e-07 |
| a8 | -396550.03 | 12127.239 | 1976.7911 | -1.0478493e-05 |
| a7 | 456831.84 | -14892.532 | -2384.573 | 0.00016584995 |
| a6 | -317269.31 | 11297.024 | 1675.0964 | -0.00161458 |
| a5 | 136135.91 | -5497.8945 | -647.71082 | 0.009587043 |
| a4 | -35604.953 | 1730.4497 | 90.918022 | -0.029323246 |
| a3 | 5415.8945 | -346.06689 | 20.432436 | -0.0094235102 |
| a2 | -444.2991 | 40.016998 | -6.1106625 | 0.45013857 |
| a1 | 19.703993 | -0.33155492 | 0.57207793 | -1.6419702 |
| a0 | 0.00027982771 | 0.0013301333 | -0.019027522 | 2.2230754 |

| | | | | |
|---|---|---|---|---|
| Table 1: 10^{th} order polynomials coefficients P'(x,2), P'(x,4), P'(x,8), P' (x, -8) for ST2084 EOTF-1. | | | | |

Table 2 illustrates a comparison error values between an approximation polynomial P'(x,2), P'(x,4) and ST2084 EOTF-1 of Eq. 2. The measured error is the relative error.

**Table 2: result comparison for ST2084 EOTF-1 and polynomials P'(x,2), P'(x,4).**

| x value | EOTF-1(x) | P'(x,2) | err(P'(x,2), EOTF-1 (x)) | P'(x,4) | err(P'(x,4), EOTF-1 (x)) |
|---|---|---|---|---|---|
| 5.0e-8 | 0.004255 | 0.004664 | 0.096055 | 0.004246 | 0.002167 |
| 1.0e-7 | 0.006302 | 0.006467 | 0.026044 | 0.006306 | 0.000604 |
| 1.0e-6 | 0.021486 | 0.019545 | 0.090352 | 0.021486 | 0.000003 |
| 1.0e-5 | 0.062337 | 0.058314 | 0.064533 | 0.062235 | 0.001639 |
| 1.0e-4 | 0.149946 | 0.157963 | 0.053468 | 0.150267 | 0.002145 |
| 1.0e-3 | 0.299699 | 0.318738 | 0.063527 | 0.299184 | 0.001717 |
| 1.0e-2 | 0.508078 | 0.469081 | 0.076755 | 0.509092 | 0.001994 |
| 1.0e-1 | 0.751827 | 0.681245 | 0.093881 | 0.751676 | 0.000201 |
| 1 | 1.000000 | 0.893451 | 0.106549 | 1.002203 | 0.002203 |

Table 3 illustrates a comparison error values between an approximation polynomial P'(x,8), P'(x, -8) and ST2084 EOTF-1 of Eq. 2. The measured error is the relative error.

**Table 3: result comparison for ST2084 EOTF-1 and polynomials P'(x,8), P'(x, -8).**

| x value | EOTF-1 (x) | P'(x,8) | err(P'(x,8), EOTF-1 (x)) | P'(x, -8) | err (P' (x, -8), EOTF-1 (x)) |
|---|---|---|---|---|---|
| 5.0e-8 | 0.004255 | 0.004254 | 0.000229 | 0.004251 | 0.000919 |
| 1.0e-7 | 0.006302 | 0.006303 | 0.000139 | 0.006306 | 0.000640 |
| 1.0e-6 | 0.021486 | 0.021489 | 0.000141 | 0.021475 | 0.000529 |
| 1.0e-5 | 0.062337 | 0.062330 | 0.000111 | 0.062361 | 0.000387 |
| 1.0e-4 | 0.149946 | 0.149946 | 0.000002 | 0.149858 | 0.000584 |
| 1.0e-3 | 0.299699 | 0.299728 | 0.000096 | 0.299846 | 0.000491 |
| 1.0e-2 | 0.508078 | 0.508027 | 0.000102 | 0.508203 | 0.000244 |
| 1.0e-1 | 0.751827 | 0.751737 | 0.000120 | 0.751363 | 0.000617 |
| 1 | 1.000000 | 1.000244 | 0.000244 | 1.000625 | 0.000625 |

As shown in Table 3 where Horner scheme formula of Eq(1) is processed, increasing the reduction exponent y for reduction function R(x, y) and its associated polynomial P'(x, y) leads to dramatically decreasing the relative error over the whole input interval [5.0e-8,1] between P'(x,y) and EOTF-1.

One or more embodiments provide a computer program comprising instructions which when executed by one or more processors cause such processors to perform the processing and/or rendering methods according to any of the embodiments described above. One or more embodiments also provide a computer readable storage medium having stored thereon instructions for processing and/or rendering video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first function" and a "second function". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining(320) a first function to apply to an input value representative of picture data;
obtaining (310, 330) a polynomial order of a polynomial function and a search interval of input values, the polynomial function being an approximation of the first function on the search interval of the polynomial order;
obtaining (340) a reduction exponent of a reduction function, wherein the reduction function, when applied to an input value in the search interval and to the reduction exponent, results in a reduced input value within a reduced interval having a lower dynamic range than search interval;
for each current value of the reduction exponent:
obtaining (350) a reduced interval with reduction function and current value of reduction exponent;
obtaining (360) the current polynomial function as an approximation of the composition function of the first function and a reciprocal function of the reduction function;
on condition (380) that an error between an output of the first function and an output of an approximation of the first function by the polynomial function on the search interval is higher than an accuracy requirement, iterating the method with an updated current value of reduction exponent; and
generating (390) an approximation of the first function with the polynomial function on the search interval obtained for the current value of reduction exponent satisfying the accuracy requirement.

2. A device comprising one or more processors configured to perform:
obtaining a first function to apply to an input value representative of picture data;
obtaining a polynomial order of a polynomial function and a search interval of input values, the polynomial function being an approximation of the first function on the search interval of the polynomial order;
obtaining a reduction exponent of a reduction function, wherein the reduction function, when applied to an input value in the search interval and to the reduction exponent, results in a reduced input value within a reduced interval having a lower dynamic range than search interval;
for each current value of the reduction exponent:
obtaining a reduced interval with reduction function and current value of reduction exponent;
obtaining the current polynomial function as an approximation of the composition function of the first function and a reciprocal function of the reduction function;
on condition that an error between an output of the first function and an output of an approximation of the first function by the polynomial function on the search interval is higher than an accuracy requirement, iterating the method with an updated current value of reduction exponent; and
generating an approximation of the first function with the polynomial function on the search interval obtained for the current value of reduction exponent satisfying the accuracy requirement.

3. The method of claim 1 or the device of claim 2, wherein the first function is a transfer function or a color conversion function.

4. The method of any of claims 1 or 3 or the device of any of claims 2 or 3 wherein a reduction function is $R \left(x, y\right) = {x}^{\frac{1}{y}}$ where x is the input value and y the reduction exponent.

5. The method of claim 4 or the device of claim 4 wherein a current value of the reduction exponent is an integer in [-8, 8].

6. The method of any of claims 4 or 5 or the device of any of claims 4 or 5 wherein an initial value of the reduction exponent is 1 or -1.

7. The method of claim 6 or the device of claim 6, wherein the current value of the reduction exponent is a power of two multiplied by the initial value of the reduction exponent.

8. A method comprising:
obtaining an input value representative of picture data;
obtaining (410, 420, 430; 440) a polynomial approximation function for a first function, a search interval of input values for the first function, a reduction function according to any of claims 1, 3 to 7,
on condition that the input value belongs to the search interval of input values for the first function used to generate the polynomial approximation function:
applying (470) the reduction function to the input value to generate the reduced input value; and
obtaining (480) an approximation of the first function applied to the input value representative of the picture data by applying the polynomial approximation function the reduced input value.

9. A device comprising one or more processors configured to perform:
obtaining an input value representative of picture data;
obtaining a polynomial approximation function for a first function, a search interval of input values for the first function, a reduction function according to any of claims 1, 3 to 7,
on condition that the input value belongs to the search interval of input values for the first function used to generate the polynomial approximation function for a first function:
applying the reduction function to the input value to generate the reduced input value; and
obtaining an approximation of the first function applied to the input value representative of the picture data by applying the polynomial approximation function to the reduced input value.

10. The method of claim 8 or the device of claim 9, wherein applying the polynomial approximation function comprise processing a Horner method for fast polynomial evaluation.

11. The method of any of claims 8 or 10 or the device of any of claims 9 or 10, wherein the first function is an inverse Electro-Optical Transfer Function EOTF that converts a linear color value of the picture data into a non-linear color value for a High Dynamic Range HDR display.

12. The method of claim 11 or the device of claim 11, wherein the reduction function is $R \left(x, y\right) = {x}^{\frac{1}{y}}$ with a value of the reduction exponent being 8 or -8.

13. Non-transitory information storage medium storing program code instructions for implementing the method according to any previous claim from claims 1, 3 to 7, 8, 10 to 13.

14. A computer program comprising program code instructions for implementing the method according to any previous claim from claims 1, 3 to 7, 8, 10 to 13.
